# EUROPEAN PATENT SPECIFICATION

(11) **EP 4 223 557 B1**
(45) Date of publication and mention of the grant of the patent: **29.01.2025**
(21) Application number: 23154486.7
(22) Date of filing: 01.02.2023
(51) Int. Cl.: B60C 9/00, B60C 9/20

(54) **MOTORCYCLE TIRE**
MOTORRADREIFEN
PNEU DE MOTOCYCLETTE

(30) Priority: 08.02.2022 JP 2022018191
(43) Date of publication of application: 09.08.2023
(73) Proprietor: Sumitomo Rubber Industries, Ltd., Kobe-shi, Hyogo-ken 651-0072 (JP)
(72) Inventor: ICHIRYU, Yutaka, Kobe-shi 651-0072 (JP)
(74) Representative: Manitz Finsterwald Patent- und Rechtsanwaltspartnerschaft mbB

(56) References cited:
- JP-A- 2001 301 422
- JP-A- 2008 162 355
- JP-B2- 4 456 380
- US-A1- 2023 302 852

## Description

### BACKGROUND OF THE INVENTION

### Field of the Invention

The present invention relates to a motorcycle tire. Motorcycle tires are generally known, see for instance JP 2008 162355 A, JP 2001 301422 A, or JP 4 456380 B2.

### Background Art

Conventionally, a motorcycle tire that includes a tread reinforcing layer in a tread portion thereof has been known. For example, Japanese Laid-Open Patent Publication No. 2018-111375 proposes a motorcycle tire that includes a tread reinforcing layer having two belt plies disposed outward of a carcass in a tire radial direction and one band ply disposed outward of the two belt plies in the tire radial direction.

However, regarding the motorcycle tire disclosed in Japanese Laid-Open Patent Publication No. 2018-111375, further improvement for which an attempt to achieve both straight running stability during high-speed running and cornering performance is made has been desired.

The present invention has been made in view of the above circumstances, and a main object of the present invention is to provide a motorcycle tire capable of achieving both straight running stability during high-speed running and cornering performance.

### SUMMARY OF THE INVENTION

The present invention is directed to a motorcycle tire including: a carcass extending from a tread portion through a pair of sidewall portions to a pair of bead portions; and a tread reinforcing layer disposed outward of the carcass in the tread portion in a tire radial direction. In the motorcycle tire, the tread reinforcing layer includes a belt layer and a band layer, the band layer includes at least one band ply in which band cords are arranged at an angle of 5° or less relative to a tire circumferential direction, the belt layer includes a pair of inner belt plies disposed on both sides of the band ply in the tire axial direction so as not to overlap the band ply and at least one outer belt ply disposed outward of the band ply in the tire radial direction so as to overlap the band ply, the inner belt plies each have inner belt cords arranged at an angle different from the angle of the band cords relative to the tire circumferential direction, and the outer belt ply has outer belt cords arranged at an angle different from both of the angle of the band cords and the angle of the inner belt cords relative to the tire circumferential direction.

By having the above-described configuration, the motorcycle tire of the present invention can achieve both straight running stability during high-speed running and cornering performance.

### BRIEF DESCRIPTION OF THE DRAWINGS

FIG. 1 is a cross-sectional view of a motorcycle tire according to one embodiment of the present invention; and
FIG. 2 is a schematic development of a tread reinforcing layer.

### DETAILED DESCRIPTION

An embodiment of the present invention will be described below in detail with reference to the drawings.

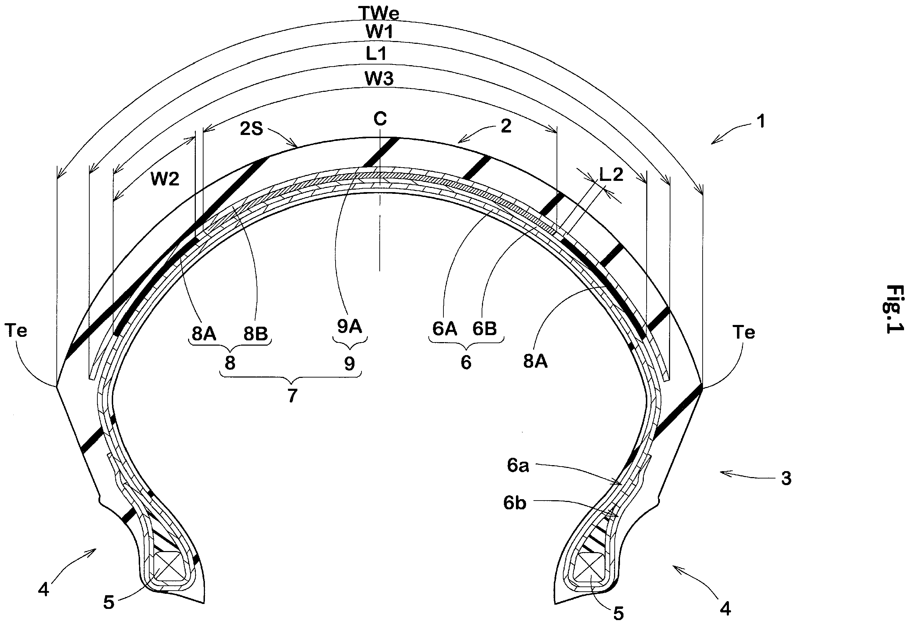

FIG. 1 is a tire meridian cross-sectional view of a motorcycle tire 1 (hereinafter, sometimes simply referred to as "tire 1"), of the embodiment of the present invention, in a normal state.

The "normal state" refers to a state in which the tire 1 is fitted to a normal rim and is inflated to a normal internal pressure, and no load is applied to the tire 1. Hereinafter, dimensions of parts of the tire 1 are values measured in the normal state, unless otherwise noted.

In a standard system including a standard on which the tire 1 is based, the "normal rim" is a rim that is defined for each tire by the standard, and is, for example, the "standard rim" in the JATMA standard, the "Design Rim" in the TRA standard, or the "Measuring Rim" in the ETRTO standard.

In a standard system including a standard on which the tire 1 is based, the "normal internal pressure" is an air pressure that is defined for each tire by the standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 of the embodiment of the present invention includes a tread portion 2, a pair of sidewall portions 3 respectively extending inward in a tire radial direction from both ends of the tread portion 2, and a pair of bead portions 4 each disposed inward of the sidewall portion 3 in the tire radial direction. In each of the pair of bead portions 4, a bead core 5 is disposed, for example.

A tread surface 2s which is the outer surface of the tread portion 2, for example, extends from a tire equator C to tread ends Te so as to be curved into an arc shape that protrudes outward in the tire radial direction. In the embodiment of the present invention, a position having a tire maximum width is determined by the positions of the tread ends Te. With such a tire 1, cornering at a large camber angle is possible.

Here, the tread ends Te are the ends of the tread portion 2 in the tire axial direction. The tire equator C is the center between the tread ends Te in the tire axial direction. In addition, a length between the tread ends Te, measured along the tread surface 2s, is a tread development width TWe.

The tire 1 of the embodiment of the present invention includes a carcass 6 extending from the tread portion 2 through the pair of sidewall portions 3 to the pair of bead portions 4. The carcass 6 includes, for example, a body portion 6a extending on and between a pair of the bead cores 5, and turned-up portions 6b connected to the body portion 6a and turned up around the bead cores 5. The tire 1 preferably includes a tread reinforcing layer 7 disposed outward of the carcass 6 in the tread portion 2 in the tire radial direction.

The carcass 6 includes at least one carcass ply in which carcass cords are arranged. In the embodiment of the present invention, the carcass 6 includes two carcass plies 6A, 6B. The carcass plies 6A, 6B, for example, include an inner carcass ply 6A disposed inward in the tire radial direction and an outer carcass ply 6B disposed outward of the inner carcass ply 6A in the tire radial direction, in the tread portion 2.

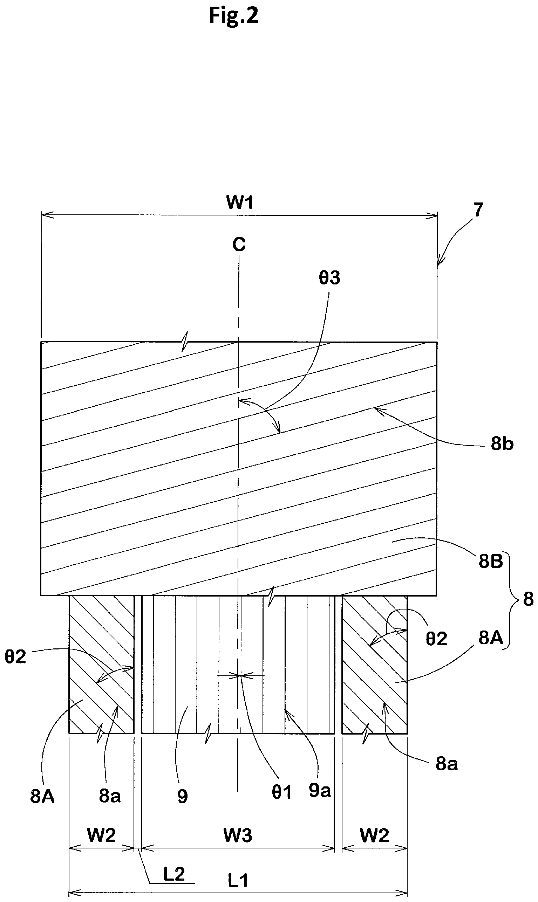

FIG. 2 is a schematic development of the tread reinforcing layer 7. As shown in FIG. 1 and FIG. 2, the tread reinforcing layer 7 of the embodiment of the present invention includes a belt layer 8 and a band layer 9. The band layer 9 includes at least one band ply 9A in which band cords 9a are arranged at an angle θ1 of 5° or less relative to a tire circumferential direction. In the embodiment of the present invention, the band layer 9 includes one band ply 9A. Here, in the present specification, the angle of each cord is measured as an angle less than or equal to a right angle relative to the tire circumferential direction.

The belt layer 8 includes a pair of inner belt plies 8A disposed on both sides of the band ply 9A in the tire axial direction and at least one outer belt ply 8B disposed outward of the band ply 9A in the tire radial direction. In the embodiment of the present invention, the belt layer 8 includes the pair of inner belt plies 8A and one outer belt ply 8B. The inner belt plies 8A are preferably disposed so as not to overlap the band ply 9A. The outer belt ply 8B is preferably disposed so as to overlap the band ply 9A.

The inner belt plies 8A of the embodiment of the present invention each have inner belt cords 8a arranged at an angle θ2 different from the angle θ1 of the band cords 9a relative to the tire circumferential direction. The outer belt ply 8B preferably has outer belt cords 8b arranged at an angle θ3 different from both the angle θ1 of the band cords 9a and the angle θ2 of the inner belt cords 8a relative to the tire circumferential direction.

Such a tread reinforcing layer 7 has the band ply 9A in an area that contacts with the ground during straight running, thereby restraining outer diameter growth during high-speed running and improving the straight running stability of the tire 1 during high-speed running. In addition, this tread reinforcing layer 7 has the inner belt plies 8A in an area that contacts with the ground during sharp cornering, thereby increasing cornering force during sharp cornering and improving the cornering performance of the tire 1 during sharp cornering.

In addition, in this tread reinforcing layer 7, the outer belt ply 8B in which the outer belt cords 8b are arranged at the angle θ3 different from the angle θ1 in the band ply 9A and the angle θ2 in the inner belt ply 8A is disposed outward in the tire radial direction, thereby improving the transient characteristics during cornering. Accordingly, the tire 1 of the embodiment of the present invention can achieve both straight running stability during high-speed running and cornering performance.

In a more preferable mode, the angle θ3 of the outer belt cords 8b relative to the tire circumferential direction is larger than the angle θ2 of the inner belt cords 8a relative to the tire circumferential direction. Such a tread reinforcing layer 7 restrains shear force that acts on the tread surface 2s during cornering, and can improve the cornering performance of the tire 1. In addition, the cornering force of the tire 1 can be adjusted by changing the angle difference between the angle θ3 of the outer belt cords 8b and the angle θ2 of the inner belt cords 8a in this tread reinforcing layer 7.

The angle θ3 of the outer belt cords 8b relative to the tire circumferential direction is preferably 70 to 90°. When the angle θ3 of the outer belt cords 8b is not less than 70°, the shear force that acts on the tread surface 2s during cornering is restrained and the stiffness change due to the band ply 9A and the inner belt plies 8A is also restrained, thereby improving the cornering performance of the tire 1. From such a viewpoint, the angle θ3 of the outer belt cords 8b is preferably not less than 80°, and more preferably not less than 85°.

Although not shown, when the angle θ3 of the outer belt cords 8b in the outer belt ply 8B is, for example, not less than 85°, the outer belt cords 8b may be line-symmetrically arranged with respect to the tire equator C. Such a tread reinforcing layer 7 provides excellent balance performance between during left cornering and during right cornering, and can further improve the cornering performance of the tire 1.

In this case, the outer belt cords 8b may be, for example, arranged in a V shape or a chevron shape centered on the tire equator C. Although the outer belt cords 8b may be arranged in an arc shape centered on the tire equator C, the maximum angle for the angle θ3 of the outer belt cords 8b is preferably not less than 85°.

The angle θ2 of the inner belt cords 8a relative to the tire circumferential direction is preferably 20 to 50°. Such inner belt plies 8A can achieve binding effect with the outer belt ply 8B, and serves to further increase the cornering force by promoting deformation of rubber in the tread surface 2s. Accordingly, the tread reinforcing layer 7 of the embodiment of the present invention can improve the cornering performance of the tire 1 during sharp cornering.

Each outer belt cord 8b and each inner belt cord 8a of the embodiment of the present invention are inclined in directions opposite to each other relative to the tire circumferential direction. Such a tread reinforcing layer 7 can achieve greater binding effect between the outer belt ply 8B and each inner belt ply 8A, and can further improve the cornering performance of the tire 1.

Each inner belt cord 8a of the embodiment of the present invention is an organic fiber cord. Examples of the material of the inner belt cords 8a include aramid, cellulose fibers, polyester, and nylon. Since the inner belt cords 8a in such an inner belt ply 8A are easily bent, the inner belt ply 8A promotes deformation of the tread surface 2s during sharp cornering, and serves to improve the cornering performance of the tire 1 during sharp cornering.

Each outer belt cord 8b is preferably an organic fiber cord, similar to the inner belt cord 8a. Examples of the material of the outer belt cords 8b include aramid, cellulose fibers, polyester, and nylon. Such an outer belt ply 8B promotes deformation of the tread surface 2s during sharp cornering in cooperation with the inner belt plies 8A, and can improve the cornering performance of the tire 1 during sharp cornering.

A development width W1 of the outer belt ply 8B is preferably not larger than the tread development width TWe. Such an outer belt ply 8B is restrained from becoming large, and serves to reduce the weight of the tire 1.

The development width W1 of the outer belt ply 8B of the embodiment of the present invention is larger than a development distance L1 between the outer edges, in the tire axial direction, of the pair of inner belt plies 8A. Such an outer belt ply 8B restrains stiffness change at the outer edges, in the tire axial direction, of the inner belt plies 8A, and thus can improve the cornering performance of the tire 1 during sharp cornering.

A development width W2 of each inner belt ply 8A is preferably 10% to 25% of the tread development width TWe. Such inner belt plies 8A serve to increase cornering force during sharp cornering.

A development width W3 of the band ply 9A of the embodiment of the present invention is smaller than the development width W1 of the outer belt ply 8B. Such a band ply 9A restrains outer diameter growth during high-speed running, and can improve the straight running stability of the tire 1 during high-speed running. In addition, this tread reinforcing layer 7 restrains stiffness change in the end portions of the band ply 9A, and can improve the cornering performance of the tire 1.

The development width W3 of the band ply 9A is preferably 40% to 65% of the tread development width TWe. When the development width W3 of the band ply 9A is 40% or more of the tread development width TWe, the band ply 9A can be reliably positioned in an area that contacts with the ground during straight running, thereby improving the straight running stability of the tire 1 during high-speed running.

When the development width W3 of the band ply 9A is 65% or less of the tread development width TWe, deformation of the tread surface 2s during cornering is promoted and force due to the outer diameter difference between the inner side and the outer side of a ground-contact surface can be generated, thereby improving the cornering performance of the tire 1. Such a band ply 9A increases a camber thrust due to deformation of the tread surface 2s, and serves to improve the cornering performance of the tire 1 during sharp cornering.

A distance L2 between the band ply 9A and each inner belt ply 8A is preferably 0 to 5 mm. Such a tread reinforcing layer 7 reduces stiffness change between the band ply 9A and each inner belt ply 8A, and serves to improve the cornering performance of the tire 1.

### EXAMPLES

Motorcycle tires each having the basic structure shown in FIG. 1 were produced as samples according to the specifications in Table 1. The tires produced as samples were mounted to the front and rear wheels of a motorcycle for tests, and sensory evaluation was made by the test driver for straight running stability during high-speed running and cornering performance during sharp cornering. The results are represented by indexes with the result of Comparative Example 1 being regarded as 100. A higher numerical value indicates that each of the straight running stability and the cornering performance is better. The common items are as follows.

### <Common items>

Front wheel tire size: 120/70R17
Front wheel air pressure: 250 kPa
Front wheel rim size: 17×3.50MT
Rear wheel tire size: 200/60R17
Rear wheel air pressure: 290 kPa
Rear wheel rim size: 17×6.00MT
Motorcycle for tests: Large-sized motorcycle

The results of the tests are shown in Table 1.

**[Table 1]**

| | Comp. Ex. 1 | Comp. Ex. 2 | Comp. Ex. 3 | Comp. Ex. 4 | Ex. 1 | Ex. 2 | Ex. 3 | Ex. 4 |
|---|---|---|---|---|---|---|---|---|
| Development width W3 of band ply / Tread development width TWe (%) | 90 | 50 | 50 | 50 | 50 | 50 | 50 | 50 |
| Development width W1 of outer belt ply / Tread development width TWe (%) | - | 50 | 90 | 100 | 100 | 100 | 100 | 100 |
| Angle θ3 of outer belt cords (°) | - | 80 | 60 | 80 | 80 | 80 | 80 | 80 |
| Development width W2 of inner belt ply / Tread development width TWe (%) | - | - | - | 20 | 20 | 20 | 20 | 20 |
| Angle θ2 of inner belt cords (°) | - | - | - | 40 | 40 | 40 | 20 | 60 |
| Distance L2 between inner belt ply and band ply (mm) | - | - | - | -5 | 1 | 5 | 1 | 1 |
| Straight running stability (index) | 100 | 85 | 95 | 100 | 105 | 100 | 105 | 105 |
| Cornering performance (index) | 100 | 85 | 100 | 95 | 120 | 105 | 110 | 120 |

| | | | | | | | | |
|---|---|---|---|---|---|---|---|---|
| Note: In Comparative Example 4, the distance L2 "-5" indicates that the inner belt ply and the band ply overlap by 5 mm. | | | | | | | | |

According to the test results, it is confirmed that the tires of Examples allowed cornering performance to be improved while maintaining straight running stability during high-speed running which was equivalent to or better than that in Comparative Examples, and allowed achievement of both straight running stability during high-speed running and cornering performance.

## Claims

1. A motorcycle tire (1) comprising: a carcass (6) extending from a tread portion (2) through a pair of sidewall portions (3) to a pair of bead portions (4); and a tread reinforcing layer (7) disposed outward of the carcass (6) in the tread portion (2) in a tire radial direction, wherein
the tread reinforcing layer (7) includes a belt layer (8) and a band layer (9),
the band layer (9) includes at least one band ply (9A) in which band cords (9a) are arranged at an angle (θ1) of 5° or less relative to a tire circumferential direction,
**characterized in that**
the belt layer (8) includes a pair of inner belt plies (8A) disposed on both sides of the band ply (9A) in the tire axial direction so as not to overlap the band ply (9A) and at least one outer belt ply (8B) disposed outward of the band ply (9A) in the tire radial direction so as to overlap the band ply (9A),
the inner belt plies (8A) each have inner belt cords (8a) arranged at an angle (θ2) different from the angle (θ1) of the band cords (9a) relative to the tire circumferential direction, and
the outer belt ply (8B) has outer belt cords (8b) arranged at an angle (θ3) different from both the angle (θ1) of the band cords (9a) and the angle (θ2) of the inner belt cords (8a) relative to the tire circumferential direction.

2. The motorcycle tire (1) according to claim 1, wherein the angle (θ3) of the outer belt cords (8b) relative to the tire circumferential direction is 70 to 90°.

3. The motorcycle tire (1) according to claim 1 or 2, wherein the angle (θ2) of the inner belt cords (8a) relative to the tire circumferential direction is 20 to 50°.

4. The motorcycle tire (1) according to any one of claims 1 to 3, wherein each outer belt cord (8b) and each inner belt cord (8a) are inclined in directions opposite to each other relative to the tire circumferential direction.

5. The motorcycle tire (1) according to any one of claims 1 to 3, wherein the outer belt cords (8b) are line-symmetrically arranged with respect to a tire equator (C).

6. The motorcycle tire (1) according to any one of claims 1 to 5, wherein a development width (W3) of the band ply (9A) is smaller than a development width (W1) of the outer belt ply (8B).

7. The motorcycle tire (1) according to any one of claims 1 to 6, wherein the development width (W3) of the band ply (9A) is 40% to 65% of a tread development width (TWe).

8. The motorcycle tire (1) according to any one of claims 1 to 7, wherein the development width (W1) of the outer belt ply (8B) is not larger than the tread development width (TWe).

9. The motorcycle tire (1) according to any one of claims 1 to 8, wherein the development width (W1) of the outer belt ply (8B) is larger than a development distance (L1) between outer edges, in the tire axial direction, of the pair of inner belt plies (8A).

10. The motorcycle tire (1) according to any one of claims 1 to 9, wherein a distance (L2) between the band ply (9A) and each inner belt ply (8A) is 0 to 5 mm.

11. The motorcycle tire (1) according to any one of claims 1 to 10, wherein each inner belt cord (8a) is an organic fiber cord.

## Patentansprüche

1. Motorradreifen (1), umfassend: eine Karkasse (6), die sich von einem Laufflächenabschnitt (2) durch ein Paar Seitenwandabschnitte (3) zu einem Paar Wulstabschnitten (4) erstreckt; und eine Laufflächenverstärkungsschicht (7), die außen von der Karkasse (6) in dem Laufflächenabschnitt (2) in einer Reifenradialrichtung angeordnet ist, wobei
die Laufflächenverstärkungsschicht (7) eine Gürtelschicht (8) und eine Bandschicht (9) umfasst,
die Bandschicht (9) mindestens eine Bandlage (9A) umfasst, in der Bandkorde (9a) in einem Winkel (θ1) von 5° oder weniger relativ zu einer Reifenumfangsrichtung angeordnet sind,
**dadurch gekennzeichnet, dass**
die Gürtelschicht (8) ein Paar innere Gürtellagen (8A), die auf beiden Seiten der Bandlage (9A) in der Reifenaxialrichtung so angeordnet sind, das sie die Bandlage (9A) nicht überlappen, und mindestens eine äußere Gürtellage (8B) umfasst, die außen von der Bandlage (9A) in der Reifenradialrichtung so angeordnet ist, dass sie die Bandlage (9A) überlappt,
die inneren Gürtellagen (8A) jeweils innere Gürtelkorde (8a) aufweisen, die in einem Winkel (θ2) angeordnet sind, der sich von dem Winkel (θ1) der Bandkorde (9a) relativ zu der Reifenumfangsrichtung unterscheidet, und
die äußere Gürtellage (8B) äußere Gürtelkorde (8b) aufweist, die in einem Winkel (θ3) angeordnet sind, der sich sowohl von dem Winkel (θ1) der Bandkorde (9a) als auch dem Winkel (θ2) der inneren Gürtelkorde (8a) relativ zu der Reifenumfangsrichtung unterscheidet.

2. Motorradreifen (1) nach Anspruch 1, wobei der Winkel (θ3) der äußeren Gürtelkorde (8b) relativ zu der Reifenumfangsrichtung 70 bis 90° beträgt.

3. Motorradreifen (1) nach Anspruch 1 oder 2, wobei der Winkel (θ2) der inneren Gürtelkorde (8a) relativ zu der Reifenumfangsrichtung 20 bis 50° beträgt.

4. Motorradreifen (1) nach einem der Ansprüche 1 bis 3, wobei jeder äußere Gürtelkord (8b) und jeder innere Gürtelkord (8a) in zueinander entgegengesetzten Richtungen relativ zu der Reifenumfangsrichtung geneigt sind.

5. Motorradreifen (1) nach einem der Ansprüche 1 bis 3, wobei die äußeren Gürtelkorde (8b) in Bezug auf einen Reifenäquator (C) liniensymmetrisch angeordnet sind.

6. Motorradreifen (1) nach einem der Ansprüche 1 bis 5, wobei eine Abwicklungsbreite (W3) der Bandlage (9A) kleiner als eine Abwicklungsbreite (W1) der äußeren Gürtellage (8B) ist.

7. Motorradreifen (1) nach einem der Ansprüche 1 bis 6, wobei die Abwicklungsbreite (W3) der Bandlage (9A) 40% bis 65% einer Laufflächenentwicklungsbreite (TWe) beträgt.

8. Motorradreifen (1) nach einem der Ansprüche 1 bis 7, wobei die Abwicklungsbreite (W1) der äußeren Gürtellage (8B) nicht größer als die Laufflächenentwicklungsbreite (TWe) ist.

9. Motorradreifen (1) nach einem der Ansprüche 1 bis 8, wobei die Abwicklungsbreite (W1) der äußeren Gürtellage (8B) größer als ein Abwicklungsabstand (L1) zwischen äußeren Kanten, in der Reifenaxialrichtung, des Paares innerer Gürtellagen (8A) ist.

10. Motorradreifen (1) nach einem der Ansprüche 1 bis 9, wobei ein Abstand (L2) zwischen der Bandlage (9A) und jeder inneren Gürtellage (8A) 0 bis 5 mm beträgt.

11. Motorradreifen (1) nach einem der Ansprüche 1 bis 10, wobei jeder innere Gürtelkord (8a) ein organischer Faserkord ist.

## Revendications

1. Pneumatique pour motocyclette (1) comprenant : une carcasse (6) s'étendant depuis une portion formant bande de roulement (2) à travers une paire de portions formant parois latérales (3) jusqu'à une paire de portions formant talon (4) ; et une couche de renforcement de bande de roulement (7) disposée à l'extérieur de la carcasse (6) dans la portion formant bande de roulement (2) dans une direction radiale du pneumatique, dans lequel la couche de renforcement de bande de roulement (7) inclut une couche de ceinture (8) et une couche de bande (9),
la couche de bande (9) inclut au moins une nappe de bande (9A) dans laquelle des câblés de bande (9a) sont agencés sous un angle (θ1) de 5° ou moins relativement à une direction circonférentielle du pneumatique,
**caractérisé en ce que**
la couche de ceinture (8) inclut une paire de nappes de ceinture intérieures (8A) disposées sur les deux côtés de la nappe de bande (9A) dans la direction axiale du pneumatique de manière à ne pas être en chevauchement avec la nappe de bande (9A) et au moins une nappe de ceinture extérieure (8B) disposée à l'extérieur de la nappe de bande (9A) dans la direction radiale du pneumatique de manière à être en chevauchement avec la nappe de bande (9A),
les nappes de ceinture intérieures (8A) ont chacune des câblés de ceinture intérieurs (8a) agencés sous un angle (θ2) différent de l'angle (θ1) des câblés de bande (9a) relativement à la direction circonférentielle du pneumatique, et
la nappe de ceinture extérieure (8B) a des câblés de ceinture extérieurs (8b) agencés sous un angle (θ3) différent à la fois de l'angle (θ1) des câblés de bande (9a) et de l'angle (θ2) des câblés de ceinture intérieurs (8a) relativement à la direction circonférentielle du pneumatique.

2. Pneumatique pour motocyclette (1) selon la revendication 1, dans lequel l'angle (θ3) des câblés de ceinture extérieurs (8b) relativement à la direction circonférentielle du pneumatique est de 70 à 90°.

3. Pneumatique pour motocyclette (1) selon la revendication 1 ou 2, dans lequel l'angle (θ2) des câblés de ceinture intérieurs (8a) relativement à la direction circonférentielle du pneumatique est de 20 à 50°.

4. Pneumatique pour motocyclette (1) selon l'une quelconque des revendications 1 à 3, dans lequel chaque câblé de ceinture extérieur (8b) et chaque câblé de ceinture intérieur (8a) sont inclinés dans des directions opposées l'une à l'autre relativement à la direction circonférentielle du pneumatique.

5. Pneumatique pour motocyclette (1) selon l'une quelconque des revendications 1 à 3, dans lequel les câblés de ceinture extérieurs (8b) sont agencés par symétrie linéaire par rapport à un équateur de pneumatique (C).

6. Pneumatique pour motocyclette (1) selon l'une quelconque des revendications 1 à 5, dans lequel une largeur de développement (W3) de la nappe de bande (9A) est inférieure à une largeur de développement (W1) de la nappe de ceinture extérieure (8B).

7. Pneumatique pour motocyclette (1) selon l'une quelconque des revendications 1 à 6, dans lequel la largeur de développement (W3) de la nappe de bande (9A) est de 40 % à 65 % d'une largeur de développement de bande de roulement (TWe).

8. Pneumatique pour motocyclette (1) selon l'une quelconque des revendications 1 à 7, dans lequel la largeur de développement (W1) de la nappe de ceinture extérieure (8B) n'est pas supérieure à la largeur de développement de bande de roulement (TWe).

9. Pneumatique pour motocyclette (1) selon l'une quelconque des revendications 1 à 8, dans lequel la largeur de développement (W1) de la nappe de ceinture extérieure (8B) est supérieure à une distance de développement (L1) entre des bords extérieurs, dans la direction axiale du pneumatique, de la paire de nappes de ceinture intérieures (8A).

10. Pneumatique pour motocyclette (1) selon l'une quelconque des revendications 1 à 9, dans lequel une distance (L2) entre la nappe de bande (9A) et chaque nappe de ceinture intérieure (8A) est de 0 à 5 mm.

11. Pneumatique pour motocyclette (1) selon l'une quelconque des revendications 1 à 10, dans lequel chaque câblé de ceinture intérieur (8a) est un câblé en fibres organiques.
